# EUROPEAN PATENT APPLICATION

(11) **EP 4 679 204 A1**
(43) Date of publication of application: **14.01.2026**
(21) Application number: 23926447.6
(22) Date of filing: 06.12.2023
(51) Int. Cl.: G05B 19/042, G05B 13/04, G05B 23/02

(54) **SIMULATION MODEL, SIMULATION SYSTEM, AND SIMULATION METHOD**

(30) Priority: 06.03.2023 JP 2023033961
(71) Applicant: Panasonic Intellectual Property Management Co., Ltd., Kadoma-shi, Osaka 571-0057 (JP)
(72) Inventor: NORISADA, Takaaki, Kadoma-shi, Osaka 571-0057 (JP)
(74) Representative: Novagraaf International SA
(86) International application number: PCT/JP2023/043639
(87) International publication number: WO 2024/185242

(57) **Abstract**

A first interface is configured to, in an AD conversion process, refer to a first parameter in a first process executed by a first processing part and execute, on a first digital signal, a process of cancelling a change by the first parameter in the first process to obtain a third digital signal corresponding to a first analog signal. A second interface is configured to, in a DA conversion process, refer to a second parameter in a second process executed by a second processing part and execute, on a second digital signal, a process of cancelling a change by the second parameter in the second process to obtain a second analog signal corresponding to a fourth digital signal.

## Description

### Technical Field

The present disclosure generally relates to simulation models, simulation systems, and simulation methods. More specifically, the present disclosure relates to a simulation model including a plant model and a controller model, a simulation system for creating the simulation model, and a simulation method of the simulation model.

### Background Art

Patent Literature 1 describes an automatic code generating device using TargetLink (registered trademark) as an example of assistance tools for automatically generating source code in the C programming language from a Simulink (registered trademark) model.

### Citation List

### Patent Literature

Patent Literature 1: JP 2020-144509 A

### Summary of Invention

The automatic code generating device described in Patent Literature 1 cannot simulate the behavior, including an influence of source code in an input/output process such as an influence of digitalization by an AD conversion process, of a controller.

A simulation model according to an aspect of the present disclosure is a simulation model for simulating behavior of a control object and behavior of a controller which controls the control object. The simulation model includes a plant model and a controller model. The plant model has a function as the control object. The controller model includes a plurality of lines of source code and has a function as the controller. The controller model includes at least one of an input or an output. The input includes a first interface, and a first processing part. The first interface is configured to execute an AD conversion process of converting a first analog signal from the plant model into a first digital signal. The first processing part is configured to execute, based on a first parameter, a first process on the first digital signal from the first interface. The output includes a second processing part and a second interface. The second processing part is configured to execute, based on a second parameter, a second process and output a second digital signal after executing the second process. The second interface is configured to execute a DA conversion process of converting the second digital signal from the second processing part into a second analog signal to the plant model. The first interface is configured to, in the AD conversion process, refer to the first parameter in the first process executed by the first processing part and execute, on the first digital signal, a process of cancelling a change by the first parameter in the first process to obtain a third digital signal corresponding to the first analog signal. The second interface is configured to, in the DA conversion process, refer to the second parameter in the second process executed by the second processing part and execute, on the second digital signal, a process of cancelling a change by the second parameter in the second process to obtain a second analog signal corresponding to a fourth digital signal obtained after a prescribed process is performed on the third digital signal.

A simulation system according to an aspect of the present disclosure is a simulation system for creating the simulation model. The simulation system includes an operation unit and a display unit. The operation unit is configured to receive an operation for creating the simulation model. The display unit is configured to display the simulation model.

A simulation method according to an aspect of the present disclosure is a simulation method of simulation model for simulating behavior of a control object and behavior of a controller which controls the control object. The simulation model includes a plant model and a controller model. The plant model has a function as the control object. The controller model includes a plurality of lines of source code and has a function as the controller. The simulation method includes at least one of an input step or an output step. The input step includes a first conversion step and a first process step. The first conversion step includes converting a first analog signal from the plant model into a first digital signal. The first process step includes executing, based on a first parameter, a first process on the first digital signal obtained in the first conversion step. The output step includes a second process step and a second conversion step. The second process step includes executing, based on a second parameter, a second process and outputting a second digital signal after the executing of the second process. The second conversion step includes converting the second digital signal obtained in the second process step into a second analog signal to the plant model. The first conversion step includes referring to the first parameter in the first process in the first process step and executing, on the first digital signal, a process of cancelling a change by the first parameter in the first process step to obtain a third digital signal corresponding to the first analog signal. The second conversion step includes referring to the second parameter in the second process in the second process step and executing, on the second digital signal, a process of cancelling a change by the second parameter in the second step to obtain a second analog signal corresponding to a fourth digital signal obtained after a prescribed process is performed on the third digital signal.

The simulation model, simulation system, and simulation method according to the aspect of the present disclosure enable the behavior, including an influence of the source code in at least one of an input process or an output process, of the controller to be simulated.

### Brief Description of Drawings

[FIG. 1] FIG. 1 is a configuration diagram of a simulation model according to a first embodiment;
[FIG. 2] FIG. 2 is a configuration diagram of part of a controller model of the simulation model;
[FIG. 3] FIG. 3 is a configuration diagram of a plant model of the simulation model;
[FIG. 4] FIG. 4 is a block diagram of a simulation system according to the first embodiment;
[FIG. 5] FIG. 5 is a flowchart of a simulation method according to the first embodiment;
[FIG. 6] FIG. 6 is a configuration diagram of a simulation model according to a second embodiment; and
[FIG. 7] FIG. 7 is a configuration diagram of a simulation model according to a third embodiment.

### Description of Embodiments

A simulation model, a simulation system, and a simulation method according to a first to third embodiments will be described below with reference to the drawings. The drawings in the first to third embodiments described below are schematic views. Moreover, configurations in the first to third embodiments described below are mere examples of the present disclosure. The present disclosure is not limited to the first to third embodiments described below and may be variously modified based on design or the like as long as the effect of the present disclosure is provided.

### (First Embodiment)

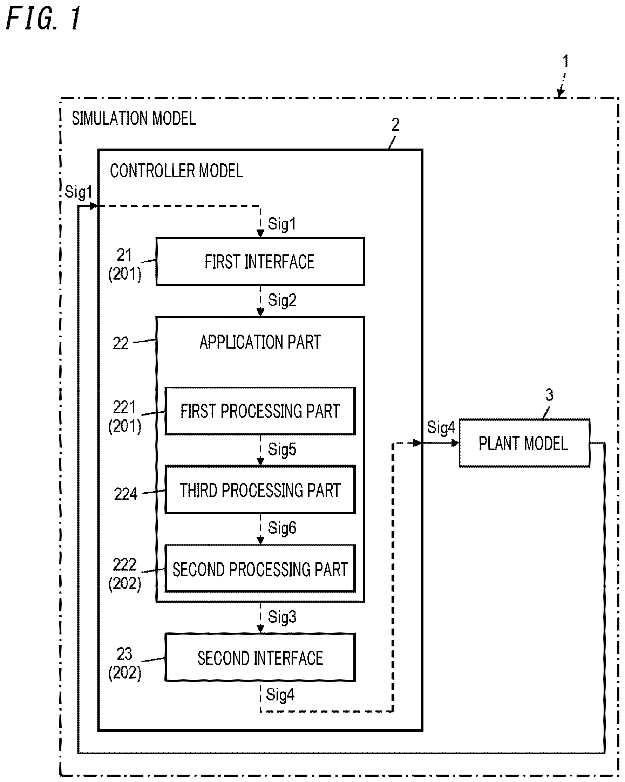

With reference to FIGS. 1 to 5 , a simulation model 1, a simulation system 100, and a simulation method according to the first embodiment will be described.

### (1) Overview

First of all, the overview of the simulation model 1 according to the first embodiment will be described with reference to FIG. 1.

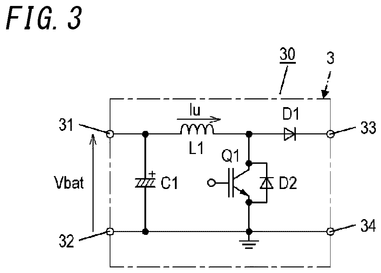

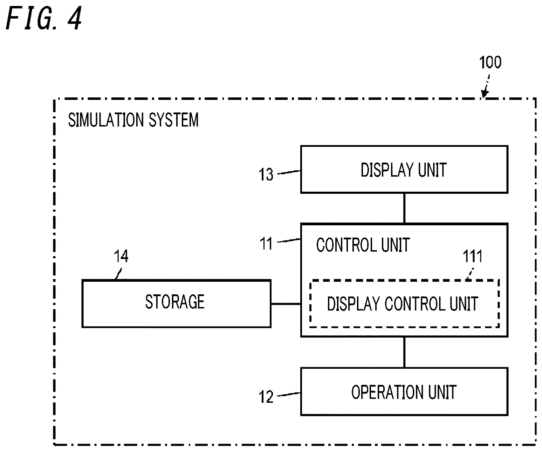

The simulation model 1 according to the first embodiment is, for example, a model for simulating behavior of a control object and behavior of a controller which controls the control object. As shown in FIG. 3, the control object is, for example, a step-up chopper circuit 30 (hereinafter also referred to as a "control object 30"). The controller includes, for example, a control circuit that controls the step-up chopper circuit 30. As shown in FIG. 1, the simulation model 1 according to the first embodiment includes a controller model 2 and a plant model 3. The controller model 2 is a model for simulating the behavior of the controller and is created by using the simulation system 100 (see FIG. 4) which will be described later. The plant model 3 is a model for simulating the behavior of the control object (plant) 30 and is created by using the simulation system 100. In the first embodiment, the controller model 2 includes source code, for example, in C programming language. That is, the simulation model 1 according to the first embodiment is a so-called Software-In-the-Loop Simulation (SILS) model.

As shown in FIG. 1, the simulation model 1 according to the first embodiment includes the plant model 3 and the controller model 2. The plant model 3 has a function as the control object 30. The controller model 2 includes a plurality of lines of source code and has a function as the controller. The controller model 2 includes an input 201 and an output 202. The input 201 includes a first interface 21, and a first processing part 221. The first interface 21 executes an AD conversion process of converting a first analog signal Sig1 from the plant model 3 into a first digital signal Sig2. The first processing part 221 executes a first process on the first digital signal Sig2 from the first interface 21. The output 202 includes a second processing part 222 and a second interface 23. The second processing part 222 executes a second process and outputs a second digital signal Sig3 after executing the second process. The second interface 23 executes a DA conversion process of converting the second digital signal Sig3 from the second processing part 222 into a second analog signal Sig4 to the plant model 3. In the AD conversion process, the first interface 21 refers to a first parameter in the first process executed by the first processing part 221 and executes based on the first parameter, on the first digital signal Sig2, a process of cancelling a change by the first parameter in the first process to obtain a third digital signal Sig5 corresponding to the first analog signal Sig1. In the DA conversion process, the second interface 23 refers to a second parameter in the second process executed by the second processing part 222 and executes based on the second parameter, on the second digital signal Sig3, a process of cancelling a change by the second parameter in the second process to obtain a second analog signal Sig4 corresponding to a fourth digital signal Sig6 obtained after a prescribed process is performed on the third digital signal Sig5.

In the simulation model 1 according to the first embodiment, the controller model 2 includes the first interface 21 and the second interface 23. In the AD conversion process, the first interface 21 executes, on the first digital signal Sig2, the process of cancelling the first parameter to obtain a third digital signal Sig5 corresponding to the first analog signal Sig1. Moreover, in the DA conversion process, the second interface 23 executes, on the second digital signal Sig3, a process of cancelling the second parameter to obtain a second analog signal Sig4 corresponding to a fourth digital signal Sig6. This enables the simulation model 1 according to the first embodiment to simulate the behavior, including the influence of the source code in both the input process and the output process, of the controller.

### (2) Details

Next, the configuration of the simulation model 1 and the configuration of the simulation system 100 according to the first embodiment will be described with reference to FIGS. 1 to 4.

### (2.1) Simulation Model

As described above, the simulation model 1 is a model for simulating the behavior of the control object 30 and the behavior of the controller, which controls the control object 30. As shown in FIG. 1, the simulation model 1 includes the controller model 2 and the plant model 3.

### (2.1.1) Controller Model

The controller model 2 includes source code, for example, in the C programming language. As described above, the controller model 2 has the function as the controller, which controls the control object 30. As shown in FIG. 1, the controller model 2 includes the first interface 21, an application part 22, and the second interface 23.

### (2.1.1.1) First Interface

The first interface 21 executes the AD conversion process of converting the first analog signal Sig1 from the plant model 3 into the first digital signal Sig2. Moreover, in the AD conversion process, the first interface 21 refers to the first parameter in the first process executed by the first processing part 221 of the application part 22 described later and executes, on the first digital signal Sig2, the process of cancelling the change by the first parameter in the first process to obtain the third digital signal Sig5 corresponding to the first analog signal Sig1.

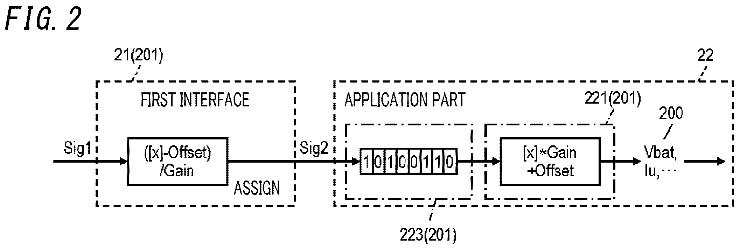

In the first embodiment, the first processing part 221 includes offset information, gain information, and resolution information in the first process described later as first parameters as shown in FIG. 2. The offset information includes, for example, an offset value Offset in AD conversion. The gain information includes, for example, a gain value Gain in the AD conversion. The resolution information includes, for example, the number of bits of the first digital signal Sig2 obtained by the AD conversion. In the example shown in FIG. 2, the number of bits of the first digital signal Sig2 is 8 bits.

In the AD conversion process, the first interface 21 converts the first analog signal Sig1 into the first digital signal Sig2 and then subtracts the offset value Offset from the first digital signal Sig2 and divides a value obtained after the subtraction by the gain value Gain as shown in FIG. 2. Then, the first interface 21 outputs the first digital signal Sig2 after the AD conversion process to the application part 22.

In the first embodiment, the AD conversion process executed by the first interface 21 corresponds to the first conversion step described later.

### (2.1.1.2) Application Part

As shown in FIG. 1, the application part 22 includes the first processing part 221, the second processing part 222, a register 223 (see FIG. 2) and a third processing part 224.

The first processing part 221 executes the first process on the first digital signal Sig2 from the first interface 21. The first process includes a process of converting a digital value x of the first digital signal Sig2 stored in the register 223 into an internal variable 200 of software. In the first embodiment, the first digital signal Sig2 includes a plurality of (in the example shown in the figure, eight) digital values x. In the first process, the first processing part 221 multiplies each of the plurality of digital values x by the gain value Gain and then adds the offset value Offset to each of the plurality of digital values x. Here, in multiplication processing by the gain value Gain and addition processing of the offset value Offset, calculations are done with the values as binary numbers. Then, the first processing part 221 converts each digital value x after the multiplication and the addition into the internal variable 200 in the first process. In the first embodiment, the internal variable 200 includes, for example, a direct-current voltage Vbat to be applied between a pair of input terminals 31 and 32 described later and an inductor current Iu (see FIG. 3) that flows to an inductor L1.

Here, in the first embodiment, the first interface 21 and the first processing part 221 are included in the input 201. The input 201 includes the first interface 21, and the first processing part 221. Moreover, in the first embodiment, the input 201 further includes the register 223, which stores the digital values x of the first digital signal Sig2.

The second processing part 222 executes the second process and outputs the second digital signal Sig3 after executing the second process. The second process includes a process of converting the internal variable of the software into a digital value of the second digital signal Sig3. In the second process, the second processing part 222 converts the internal variable of the software into digital values of the second digital signal Sig3 and then subtracts the offset value from each digital value and divides each digital value obtained after the subtraction by the gain value. The number of bits of the second digital signal Sig3 is, for example, 8 bits. In the first embodiment, each of the offset value, the gain value, and the number of bits described above is the second parameter. That is, the second processing part 222 includes the offset information (offset value), the gain information (gain value), and the resolution information (the number of bits) as the second parameters in the second process.

In the AD conversion process, the register 223 stores (saves) the plurality of (eight) digital values x of the first digital signal Sig2. Moreover, in the DA conversion process, the register 223 stores (saves) the plurality of (eight) digital values of the second digital signal Sig3.

The third processing part 224 executes a prescribed process on the third digital signal Sig5 received from the first processing part 221 to generate the fourth digital signal Sig6 and outputs the fourth digital signal Sig6 thus generated to the second processing part 222. As described later, when the plant model 3 is the step-up chopper circuit 30, the third digital signal Sig5 corresponds to, for example, the inductor current Iu flowing to the inductor L1 (see FIG. 3), and the fourth digital signal Sig6 corresponds to, for example, a drive signal of a switching device Q1 (see FIG. 3). That is, the third processing part 224 generates, based on the third digital signal Sig5 corresponding to the inductor current Iu, the fourth digital signal Sig6 corresponding to the drive signal of the switching device Q1. That is, the fourth digital signal Sig6 is a signal which is the third digital signal Sig5 obtained after the prescribed process is performed.

Here, in the first embodiment, the controller model 2 includes the source code in the C programming language as described above. Thus, the application part 22 including the first processing part 221 and the second processing part 222 is implemented in the C programming language.

In the first embodiment, the first process executed by the first processing part 221 corresponds to a first process step described later, and the second process executed by the second processing part 222 corresponds to a second process step described later.

### (2.1.1.3) Second Interface

The second interface 23 executes the DA conversion process of converting the second digital signal Sig3 from the second processing part 222 of the application part 22 into the second analog signal Sig4 to the plant model 3. Moreover, in the DA conversion process, the second interface 23 refers to the second parameter in the second process executed by the second processing part 222 and executes, on the second digital signal Sig3, the process of cancelling the change by the second parameter in the second process to obtain the second analog signal Sig4 corresponding to the fourth digital signal Sig6.

In the first embodiment, the second interface 23 multiplies each digital value of the second digital signal Sig3 by the gain value and then adds the offset value to each digital value in the DA conversion process. Then, the second interface 23 converts the second digital signal Sig3 after the multiplication and the addition into the second analog signal Sig4 and outputs the second analog signal Sig4 to the plant model 3.

Here, in the first embodiment, the second interface 23 and the second processing part 222 are included in the output 202. That is, the output 202 includes the second interface 23 and the second processing part 222. In the first embodiment, the controller model 2 includes both the input 201 and the output 202.

In the first embodiment, the DA conversion process executed by the second interface 23 corresponds to a second conversion step described later.

### (2.1.2) Plant Model

The plant model 3 is a model having the function as the control object 30. In the first embodiment, the step-up chopper circuit 30 is shown in FIG. 3 as an example of the control object 30. The step-up chopper circuit 30 includes the switching device Q1, the inductor L1, a capacitor C1, and plurality of (in the example shown in the figure, two) diodes D1 and D2. Moreover, the step-up chopper circuit 30 further includes the pair of input terminals 31 and 32 and a pair of output terminals 33 and 34.

The switching device Q1 is, for example, an Insulated Gated Bipolar Transistor (IGBT). The switching device Q1 includes a collector, an emitter, and a gate.

The collector of the switching device Q1 is connected via the inductor L1 to the input terminal 31 on a positive electrode side of the pair of input terminals 31 and 32. Moreover, the collector of the switching device Q1 is connected via the diode D1 to the output terminal 33 on the positive electrode side of the pair of output terminals 33 and 34. That is, between the input terminal 31 on the positive electrode side and the output terminal 33 on the positive electrode side a series circuit of the inductor L1 and the diode D1 is connected.

The emitter of the switching device Q1 is connected to the input terminal 32 on a negative electrode side and the output terminal 34 on the negative electrode side. Moreover, the emitter of the switching device Q1 is connected to ground.

The capacitor C1 is connected between the pair of input terminals 31 and 32.

As described above, the diode D1 is connected in series to the inductor L1 between the input terminal 31 and the output terminal 33. The diode D1 has an anode connected to the collector of the switching device Q1 and connected to a second end (end at the side of the diode D1) of the inductor L1. The diode D1 has a cathode connected to the output terminal 33. The inductor L1 has a first end (end opposite the diode D1) connected to the input terminal 31.

The diode D2 is connected in anti-parallel to the switching device Q1. The diode D2 has an anode connected to the emitter of the switching device Q1, and the diode D2 has a cathode connected to the collector of the switching device Q1.

In the example shown in FIG. 3, the direct-current voltage Vbat is applied between the pair of input terminals 31 and 32, and the inductor current Iu flows to the inductor L1. In the example shown in FIG. 3, the direct-current voltage Vbat and the inductor current Iu are included in the internal variable 200.

### (2.2) Simulation System

The simulation system 100 according to the first embodiment is a system for creating the simulation model 1. The simulation system 100 is, for example, a personal computer (hereinafter also referred to as a "PC 100"). That is, in the first embodiment, the simulation system 100 includes one device (PC 100).

As shown in FIG. 4, the simulation system 100 includes a control unit 11, an operation unit 12, a display unit 13, and a storage 14.

### (2.2.1) Control Unit

The control unit 11 can be embodied by, for example, a computer system (e.g., the PC 100) including one or more processors and one or more memory elements. That is, the one or more processors execute a program(s) stored in the one or more memory elements of the computer system, thereby implementing a function as the control unit 11 (including a display control unit 111 described later). In this embodiment, the program(s) is stored in the one or more memory elements of the control unit 11 in advance but may be provided over a telecommunications network such as the Internet, or may be provided by a non-transitory recording medium such as a memory card in which the program(s) has been stored.

The control unit 11 is electrically connected to each of the operation unit 12, the display unit 13, and the storage 14. The control unit 11 acquires an operation signal from the operation unit 12. The control unit 11 (exactly speaking, the display control unit 111 described later) outputs a control signal to the display unit 13 and causes the display unit 13 to display the simulation model 1 created in accordance with the operation signal from the operation unit 12. The control unit 11 stores the simulation model 1 created in accordance with the operation signal from the operation unit 12 in the storage 14.

The control unit 11 includes the display control unit 111. The display control unit 111 controls the display unit 13. Specifically, the display control unit 111 outputs the control signal to the display unit 13 and causes the display unit 13 to display the simulation model 1 created in accordance with the operation signal from the operation unit 12.

### (2.2.2) Operation Unit

The operation unit 12 receives an operation for creating the simulation model 1. In the first embodiment, the simulation system 100 is the PC 100 as described above. Therefore, the operation unit 12 includes a pointing device, such as a keyboard, a mouse, a touch panel, or a touchpad, belonging to the PC 100. The operation unit 12 converts an operation input given by using the pointing device into an operation signal and outputs the operation signal to the control unit 11.

### (2.2.3) Display Unit

The display unit 13 displays the simulation model 1 created by using the operation unit 12. The display unit 13 is, for example, a liquid crystal display included in the PC 100. Note that when the simulation system 100 includes a touch panel display, the display unit 13 may constitute the touch panel display together with the operation unit 12.

### (2.2.4) Storage

The storage 14 includes a device selected from, for example, Read Only Memory (ROM), Random Access Memory (RAM), and Electrically Erasable Programmable Read Only Memory (EEPROM). The storage 14 stores various types of information. The storage 14 stores, for example, the simulation model 1. In the first embodiment, the storage 14 stores the simulation model 1 in association with, for example, the date and time when the simulation model 1 was created, and the name of a person who created the simulation model 1.

### (3) Simulation Method

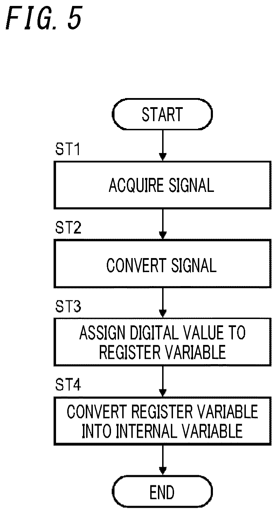

Next, the simulation method according to the first embodiment will be described with reference to FIG. 5.

The simulation method according to the first embodiment is a simulation method used for the simulation model 1 described above. The simulation model 1 includes the plant model 3 and the controller model 2. The plant model 3 has the function as the control object 30. The controller model 2 includes the plurality of lines of source code and has the function as the controller. The simulation method includes at least one of an input step or an output step. The input step includes the first conversion step and the first process step. The first conversion step includes converting the first analog signal Sig1 from the plant model 3 into the first digital signal Sig2. The first process step includes executing the first process on the first digital signal Sig2 obtained in the first conversion step. The output step includes the second process step and the second conversion step. The second process step includes executing the second process and outputting the second digital signal Sig3 after the executing of the second process. The second conversion step includes converting the second digital signal Sig3 obtained in the second process step into the second analog signal Sig4 to the plant model 3. The first conversion step includes referring to the first parameter in the first process in the first process step and executing, on the first digital signal Sig2, the process of cancelling the change by the first parameter in the first process step to obtain the third digital signal Sig5 corresponding to the first analog signal Sig1. The second conversion step includes referring to the second parameter in the second process in the second process step and executing, on the second digital signal Sig3, the process of cancelling the change by the second parameter in the second step to obtain a second analog signal Sig4 corresponding to the fourth digital signal Sig6 obtained after the prescribed process is performed on the third digital signal Sig5.

That is, the simulation method according to the first embodiment is a simulation method used for the simulation model 1 according to the first embodiment. In this simulation method, in the first conversion step, the process of cancelling the change by the first parameter in the first process step is executed on the first digital signal Sig2 to obtain the third digital signal Sig5 corresponding to the first analog signal Sig1. Moreover, in the second conversion step, the process of cancelling the change by the second parameter in the second step is executed on the second digital signal Sig3 to obtain the second analog signal Sig4 corresponding to the fourth digital signal Sig6. Thus, the simulation method according to the first embodiment enables the behavior, including an influence of the source code in at least one of the input process or the output process, of the controller to be simulated.

FIG. 5 is a flowchart of the simulation method executed by the simulation model 1 according to the first embodiment. The simulation method includes steps ST1 to ST4 shown in FIG. 5. The example in FIG. 5 shows operation of the input 201 (the first interface 21 and the first processing part 221) of the controller model 2 in the simulation method executed by the simulation model 1.

First of all, the first interface 21 of the controller model 2 acquires the first analog signal Sig1 from the plant model 3 (ST1). The first analog signal Sig1 is, for example, a strong power signal.

Then, the first interface 21 converts the first analog signal Sig1 into the first digital signal Sig2 (ST2). Moreover, in the AD conversion process, the first interface 21 executes, on the first digital signal Sig2, the process of cancelling the change by the first parameter in the first process.

Next, the first interface 21 assigns the digital values x of the first digital signal Sig2 to respective register variables (ST3). In other words, the first interface 21 stores (saves) the digital values x of the first digital signal Sig2 in the register 223.

Finally, the first processing part 221 acquires the register variables stored in the register 223, executes the first process on each of the register variable, and then converts each of the register variable into the internal variable 200 to be used in the software (ST4). Here, the first processing part 221 is generally implemented by a program in the C programming language packaged in a microcontroller.

### (4) Effects

In the simulation model 1 according to the first embodiment, the controller model 2 includes both the first interface 21 and the second interface 23. The first interface 21 executes, on the first digital signal Sig2, the process of cancelling the change by the first parameter in the first process to obtain the first digital signal Sig2 corresponding to the first analog signal Sig1. Moreover, the second interface 23 executes, on the second digital signal Sig3, the process of cancelling the change by the second parameter in the second process to obtain the second analog signal Sig4 corresponding to the second digital signal Sig3. This enables the simulation model 1 according to the first embodiment to simulate the behavior, including the influence of the source code in both the input process and the output process, of the controller.

Moreover, in the simulation model 1 according to the first embodiment, the first processing part 221 includes the offset information, gain information, and resolution information in the first process as the first parameters. This enables the first digital signal Sig2 corresponding to the first analog signal Sig1 from the plant model 3 to be obtained.

Moreover, in the simulation model 1 according to the first embodiment, the second processing part 222 includes the offset information, gain information, and resolution information in the second process as the second parameters. This enables the second analog signal Sig4 corresponding to the second digital signal Sig3 to be output to the plant model 3.

Moreover, in the simulation model 1 according to the first embodiment, the first processing part 221 executes the first process, which enables the digital values x of the first digital signal Sig2 to be converted into the internal variables 200 of the software.

Moreover, the simulation model 1 according to the first embodiment enables the application part 22 including the first processing part 221 and the second processing part 222 to be configured by the source code.

Moreover, the simulation system 100 according to the first embodiment enables the simulation model 1 created by using the simulation system 100 to simulate the behavior, including the influence of the source code in both the input process and the output process, of the controller.

### (5) Variations

The first embodiment is a mere example of various embodiments of the present disclosure. The first embodiment may be modified variously depending on design or the lie as long as the object of the present disclosure is achieved. Variations of the first embodiment will be enumerated below. Any of the variations to be described below may be combined as appropriate.

The simulation system 100 and an agent that carries out the simulation method of the present disclosure include a computer system. The computer system may include a processor and a memory element as principal hardware components thereof. The processor executes a program stored in the memory of the computer system, thereby implementing a function as the simulation system 100 or the agent that carries out the simulation method of the present disclosure. The program may be stored in advance in the memory element of the computer system. Alternatively, the program may also be downloaded over a telecommunications network or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memory elements. Thus, the microcontroller may also be implemented as a single or a plurality of electronic circuits including a semiconductor integrated circuit or a large-scale integrated circuit.

Moreover, collecting the plurality of functions in the simulation system 100 in a single housing is not an essential configuration for the simulation system 100. The components of the simulation system 100 may be distributed in a plurality of housings. Further, at least some functions of the simulation system 100 (e.g., some functions of the control unit 11) may be implemented as a cloud computing system as well.

In the first embodiment, the first processing part 221 includes all of the offset information, gain information, and resolution information in the first process as the first parameters. However, it suffices that the first processing part 221 includes at least one of the offset information, gain information, and resolution information in the first process. Moreover, the second processing part 222 includes all of the offset information, gain information, and resolution information in the second process as the second parameters. However, it suffices that the second processing part 222 includes at least one of the offset information, gain information, and resolution information in the second process. Note that the second parameter has to include information which is the same as that of the first parameter.

In the first embodiment, the source code configuring the application part 22 including the first processing part 221 and the second processing part 222 is created in the C programming language. However, the source code may be created in, for example, C++, C#, binary language, Java, MATLAB (registered trademark), or python. That is, the application part 22 including the first processing part 221 and the second processing part 222 is implemented by using the C programming language, C++, C#, binary language, Java, MATLAB (registered trademark), or python.

In the first embodiment, the application part 22 includes the first processing part 221, the second processing part 222, and the register 223 but may include a component(s) other than the first processing part 221, the second processing part 222, and the register 223.

In the first embodiment, the control object 30 is the step-up chopper circuit 30, but the control object 30 is not limited to the step-up chopper circuit 30. The control object 30 may be, for example, a step-down chopper circuit, a step-up/step-down chopper circuit, or any other circuit. Moreover, the control object is not limited to the circuit described above but may be any other component as long as it is controlled by the controller.

In the first embodiment, the switching device Q1 is the IGBT, but the switching device Q1 is not limited to the IGBT. The switching device Q1 may be, for example, a Metal-Oxide-Semiconductor Field Effect Transistor (MOSFET).

In the first embodiment, both the first interface 21 and the second interface 23 are included in the application part 22. However, at least one of the first interface 21 or the second interface 23 may be included in the plant model 3. Moreover, at least one of the first interface 21 and the second interface 23 may be disposed at a connecting portion of the controller model 2 and the plant model 3.

In the first embodiment, the second interface 23 executes the DA conversion process, but the second interface 23 may perform a conversion process(es) other than the DA conversion process. For example, the second interface 23 may perform a process of converting a direct current signal or a direct current voltage signal into a Pulse Width Modulation (PWM) signal.

### (Second Embodiment)

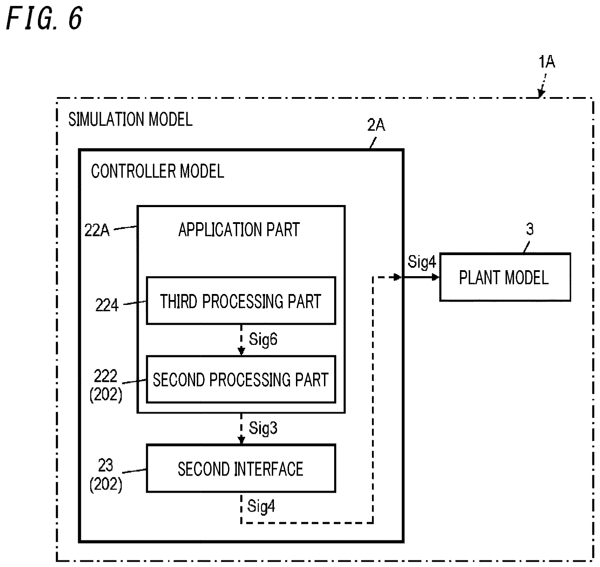

With reference to FIG. 6, a simulation model 1A according to the second embodiment will be described. In the simulation model 1A according to the second embodiment, components similar to those in the simulation model 1 according to the first embodiment (see FIG. 1) are denoted by the same reference signs as those in the first embodiment, and the description thereof is omitted.

The simulation model 1A according to the second embodiment is different from the simulation model 1 according to the first embodiment in that the input 201 including the first interface 21 and the first processing part 221 is omitted.

As shown in FIG. 6, the simulation model 1A according to the second embodiment includes a controller model 2A and a plant model 3.

The controller model 2A includes an application part 22A and a second interface 23. The application part 22A includes a second processing part 222 and a third processing part 224. That is, in the simulation model 1A according to the second embodiment, the controller model 2A includes an output 202 which is one of: the input 201 including the first interface 21 and the first processing part 221; and the output 202 including the second processing part 222 and the second interface 23, the input 201 and the output 202 being included in the controller model 2 in the first embodiment.

The third processing part 224 of the application part 22A outputs a fourth digital signal Sig6 to the second processing part 222. The second processing part 222 of the application part 22A executes the second process described above on the fourth digital signal Sig6 and outputs a second digital signal Sig3 after executing the second process to the second interface 23.

In the DA conversion process, the second interface 23 converts the second digital signal Sig3 from the second processing part 222 of the application part 22 into a second analog signal Sig4. Moreover, in the DA conversion process, the second interface 23 refers to a second parameter in the second process executed by the second processing part 222 and executes, on the second digital signal Sig3, a process of cancelling a change by the second parameter in the second process to obtain the second analog signal Sig4 corresponding to the fourth digital signal Sig6. Then, the second interface 23 outputs the second analog signal Sig4 after executing the process to the plant model 3.

The simulation model 1A according to the second embodiment enables the behavior, including the influence of the output process, of the controller to be simulated.

### (Third Embodiment)

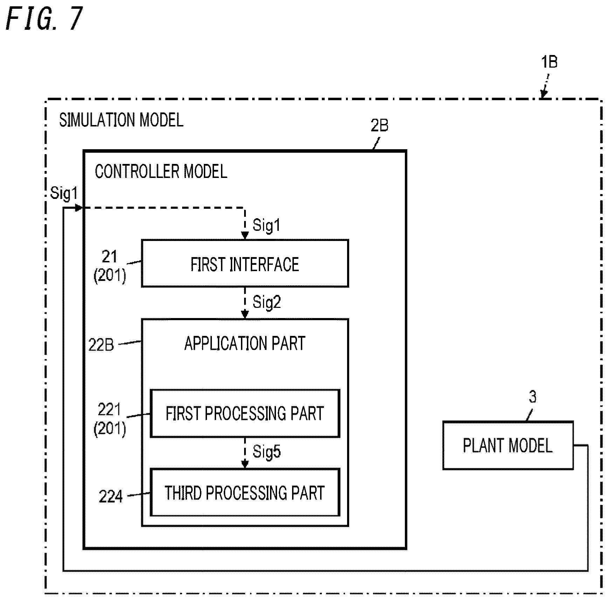

A simulation model 1B according to the third embodiment will be described with reference to FIG. 7. In the simulation model 1B according to the third embodiment, components similar to those in the simulation model 1 according to the first embodiment (see FIG. 1) are denoted by the same reference signs as those in the first embodiment, and the description thereof will be omitted.

The simulation model 1B according to the third embodiment is different from the simulation model 1 according to the first embodiment in that the output 202 including the second processing part 222 and the second interface 23 is omitted.

As shown in FIG. 7, the simulation model 1B according to the third embodiment includes a controller model 2B and a plant model 3.

The controller model 2B includes a first interface 21 and an application part 22B. The application part 22B includes a first processing part 221 and a third processing part 224. That is, in the simulation model 1B according to the third embodiment, the controller model 2B includes an input 201 which is one of: the input 201 including the first interface 21 and the first processing part 221; and the output 202 including the second processing part 222 and the second interface 23, the input 201 and the output 202 being included in the controller model 2 in the first embodiment.

In the AD conversion process, the first interface 21 converts a first analog signal Sig1 from the plant model 3 into a first digital signal Sig2. Moreover, in the AD conversion process, the first interface 21 refers to a first parameter in the first process executed by the first processing part 221 and executes, on the first digital signal Sig2, the process of cancelling a change by the first parameter in the first process to obtain a third digital signal Sig5 corresponding to the first analog signal Sig1.

The first processing part 221 of the application part 22B executes the first process on the first digital signal Sig2 from the first interface 21. Moreover, the first processing part 221 outputs the third digital signal Sig5 after executing the first process to the third processing part 224.

The simulation model 1B according to the third embodiment enables the behavior, including the influence of the input process, of the controller to be simulated.

### (Aspects)

The present specification discloses the following aspects.

A simulation model (1; 1A; 1B) of a first aspect is a simulation model for simulating behavior of a control object (30) and behavior of a controller which controls the control object (30). The simulation model (1; 1A; 1B) includes a plant model (3) and a controller model (2; 2A; 2B). The plant model (3) has a function as the control object (30). The controller model (2; 2A; 2B) includes a plurality of lines of source code and has a function as the controller. The controller model (2; 2A; 2B) includes at least one of an input (201) or an output (202). The input (201) includes a first interface (21) and a first processing part (221). The first interface (21) is configured to execute an AD conversion process of converting a first analog signal (Sig1) from the plant model (3) into a first digital signal (Sig2). The first processing part (221) is configured to execute a first process on the first digital signal (Sig2) from the first interface (21). The output (202) includes a second processing part (222) and a second interface (23). The second processing part (222) is configured to execute a second process and output a second digital signal (Sig3) after executing the second process. The second interface (23) is configured to execute a DA conversion process of converting the second digital signal (Sig3) from the second processing part (222) into a second analog signal (Sig4) to the plant model (3). The first interface (21) is configured to, in the AD conversion process, refer to a first parameter in the first process executed by the first processing part (221) and execute, on the first digital signal (Sig2), a process of cancelling a change by the first parameter in the first process to obtain a third digital signal (Sig5) corresponding to the first analog signal (Sig1). The second interface (23) is configured to, in the DA conversion process, refer to a second parameter in the second process executed by the second processing part (222) and execute, on the second digital signal (Sig3), a process of cancelling a change by the second parameter in the second process to obtain a second analog signal (Sig4) corresponding to a fourth digital signal (Sig6) obtained after a prescribed process is performed on the third digital signal (Sig5).

In this aspect, the controller model (2; 2A; 2B) includes at least one of the first interface (21) or the second interface (23). In the AD conversion process, the first interface (21) executes, on the first digital signal (Sig2), the process of cancelling the change by the first parameter in the first process to obtain the third digital signal (Sig5) corresponding to the first analog signal (Sig1). Moreover, in the DA conversion process, the second interface (23) executes, on the second digital signal (Sig3), the process of cancelling the change by the second parameter in the second process to obtain the second analog signal (Sig4) corresponding to the fourth digital signal (Sig6). Thus, this aspect enables the behavior, including an influence of the source code in at least one of an input process or an output process, of the controller to be simulated.

In a simulation model (1; 1A; 1B) of a second aspect referring to the first aspect, the first processing part (221) includes at least one of offset information, gain information, or resolution information in the first process as the first parameter.

This aspect enables the third digital signal (Sig5) corresponding to the first analog signal (Sig1) from the plant model (3) to be obtained.

In a simulation model (1; 1A; 1B) of a third aspect referring to the first or second aspect, the second processing part (222) includes at least one of offset information, gain information, or resolution information in the second process as the second parameter.

This aspect enables the second analog signal (Sig4) corresponding to the fourth digital signal (Sig6) to be output to the plant model (3).

In a simulation model (1; 1B) of a fourth aspect referring to any one of the first to third aspects, the input (201) further includes a register (223) configured to store a digital value of the first digital signal (Sig2). The first process includes a process of converting the digital value (x) of the first digital signal (Sig2) stored in the register (223) into an internal variable (200) of software.

With this aspect, executing the first process by the first processing part (221) enables the digital value (x) of the first digital signal (Sig2) to be converted into the internal variable (200) of the software.

In a simulation model (1; 1A; 1B) of a fifth aspect referring to any one of the first to fourth aspects, an application part (22; 22A; 22B) including at least one of the first processing part (221) or the second processing part (222) is implemented in C programming language, C++, C#, binary language, Java, MATLAB (registered trademark), or python.

This aspect enables the application part (22; 22A; 22B) to be configured by the source code.

A simulation system (100) of a sixth aspect is a simulation system (100) for creating the simulation model (1; 1A; 1B) of any one of the first to fifth aspects. The simulation system (100) includes an operation unit (12) and a display unit (13). The operation unit (12) is configured to receive an operation for creating the simulation model (1; 1A; 1B). The display unit (13) is configured to display the simulation model (1; 1A; 1B).

With this aspect, the simulation model (1; 1A; 1B) created by using the simulation system (100) enables the behavior, including an influence of the source code in at least one of an input process or an output process, of the controller to be simulated.

A simulation method of a seventh aspect is a simulation method of a simulation model (1; 1A; 1B) for simulating behavior of a control object (30) and behavior of a controller which controls the control object (30). The simulation model (1; 1A; 1B) includes a plant model (3) and a controller model (2; 2A; 2B). The plant model (3) has a function as the control object (30). The controller model (2; 2A; 2B) includes a plurality of lines of source code and has a function as the controller. The simulation method includes at least one of an input step or an output step. The input step includes a first conversion step and a first process step. The first conversion step includes converting a first analog signal (Sig1) from the plant model (3) into a first digital signal (Sig2). The first process step includes executing a first process on the first digital signal (Sig2) obtained in the first conversion step. The output step includes a second process step and a second conversion step. The second process step includes executing a second process and outputting a second digital signal (Sig3) after the executing of the second process. The second conversion step includes converting the second digital signal (Sig3) obtained in the second process step into a second analog signal (Sig4) to the plant model (3). The first conversion step includes referring to a first parameter in the first process in the first process step and executing, on the first digital signal (Sig2), a process of cancelling a change by the first parameter in the first process step to obtain a third digital signal (Sig5) corresponding to the first analog signal (Sig1). The second conversion step includes referring to a second parameter in the second process in the second process step and executing, on the second digital signal (Sig3), a process of cancelling a change by the second parameter in the second step to obtain a second analog signal (Sig4) corresponding to a fourth digital signal (Sig6) obtained after a prescribed process is performed on the third digital signal (Sig5).

In this aspect, the simulation method includes at least one of the first conversion step or the second conversion step. The first conversion step includes executing, on the first digital signal (Sig2), the process of cancelling the first parameter to obtain the third digital signal (Sig5) corresponding to the first analog signal (Sig1).The second conversion step includes executing, on the second digital signal (Sig3), the process of cancelling the second parameter to obtain the second analog signal (Sig4) corresponding to the fourth digital signal (Sig6). Thus, this aspect enables the behavior, including an influence of the source code in at least one of an input process or an output process, of the controller to be simulated.

The configurations of the second to fifth aspects are not essential configurations for the simulation model (1; 1A; 1B) and may thus accordingly be omitted.

### Reference Signs List

- 1, 1A, 1B: Simulation Model
- 2, 2A, 2B: Controller Model
- 3: Plant Model
- 12: Operation Unit
- 13: Display Unit
- 21: First Interface
- 22, 22A, 22B: Application Part
- 23: Second Interface
- 30: Step-Up Chopper Circuit (Control Objects)
- 100: Simulation System
- 200: Internal Variable
- 201: Input
- 202: Output
- 221: First Processing Part
- 222: Second Processing Part
- 223: Register
- Sig 1: First Analog Signal
- Sig2: First Digital Signal
- Sig3: Second Digital Signal
- Sig4: Second Analog Signal
- Sig5: Third Digital Signal
- Sig6: Fourth Digital Signal
- x: Digital Value

## Claims

1. A simulation model for simulating behavior of a control object and behavior of a controller which controls the control object, the simulation model comprising:
a plant model having a function as the control object; and
a controller model including a plurality of lines of source code and having a function as the controller,
the controller model including at least one of
an input including
a first interface configured to execute an AD conversion process of converting a first analog signal from the plant model into a first digital signal and
a first processing part configured to execute, based on a first parameter, a first process on the first digital signal from the first interface or
an output including
a second processing part configured to execute, based on a second parameter, a second process and output a second digital signal after executing the second process and
a second interface configured to execute a DA conversion process of converting the second digital signal from the second processing part into a second analog signal to the plant model,
the first interface being configured to, in the AD conversion process, refer to the first parameter in the first process executed by the first processing part and execute, on the first digital signal, a process of cancelling a change by the first parameter in the first process to obtain a third digital signal corresponding to the first analog signal,
the second interface being configured to, in the DA conversion process, refer to the second parameter in the second process executed by the second processing part and execute, on the second digital signal, a process of cancelling a change by the second parameter in the second process to obtain a second analog signal corresponding to a fourth digital signal obtained after a prescribed process is performed on the third digital signal.

2. The simulation model of claim 1, wherein
the first processing part includes at least one of offset information, gain information, or resolution information in the first process as the first parameter.

3. The simulation model of claim 1 or 2, wherein
the second processing part includes at least one of offset information, gain information, or resolution information in the second process as the second parameter.

4. The simulation model of any one of claims 1 to 3, wherein
the input further includes a register configured to store a digital value of the first digital signal, and
the first process includes a process of converting the digital value of the first digital signal stored in the register into an internal variable of software.

5. The simulation model of any one of claims 1 to 4, wherein
an application part including at least one of the first processing part or the second processing part is implemented in C programming language, C++, C#, binary language, Java, MATLAB (registered trademark), or python.

6. A simulation system for creating the simulation model of any one of claims 1 to 5, the simulation system comprising:
an operation unit configured to receive an operation for creating the simulation model; and
a display unit configured to display the simulation model.

7. A simulation method of a simulation model for simulating behavior of a control object and behavior of a controller which controls the control object,
the simulation model including
a plant model having a function as the control object and
a controller model including a plurality of lines of source code and having a function as the controller,
the simulation method comprising at least one of
an input step including
a first conversion step including converting a first analog signal from the plant model into a first digital signal and
a first process step including executing, based on a first parameter, a first process on the first digital signal obtained in the first conversion step or
an output step including
a second process step including executing, based on a second parameter, a second process and outputting a second digital signal after the executing of the second process and
a second conversion step including converting the second digital signal obtained in the second process step into a second analog signal to the plant model,
the first conversion step including referring to the first parameter in the first process in the first process step and executing, on the first digital signal, a process of cancelling a change by the first parameter in the first process step to obtain a third digital signal corresponding to the first analog signal,
the second conversion step including referring to the second parameter in the second process in the second process step and executing, on the second digital signal, a process of cancelling a change by the second parameter in the second step to obtain a second analog signal corresponding to a fourth digital signal obtained after a prescribed process is performed on the third digital signal.
